# EUROPÄISCHE PATENTSCHRIFT

(11) **EP 0 954 186 B1**
(45) Veröffentlichungstag und Bekanntmachung des Hinweises auf die Patenterteilung: **07.11.2007**
(21) Anmeldenummer: 99100900.2
(22) Anmeldetag: 19.01.1999
(51) Int. Cl.: H04Q 3/545

(54) **Verfahren zum Komprimieren eines Rufnummern-Datenbestands einer Telekommunikationsanlage und entsprechende Telekommunikationsanlage**
Method for compression of a call-number data-record of a switching system and a switching system provided therewith
Procédé pour la compression d'un ensemble de données relatifs à des numéros d'appel d'un central de commutation et central de commutation correspondant

(30) Priorität: 27.04.1998 DE 19818823
(43) Veröffentlichungstag der Anmeldung: 03.11.1999
(73) Patentinhaber: SIEMENS AKTIENGESELLSCHAFT, 80333 München (DE)
(72) Erfinder: Roemer, Wilfried, 10713 Berlin (DE)

(56) Entgegenhaltungen:
- MCAULEY A J ET AL: "FAST ROUTING TABLE LOOKUP USING CAMS" PROCEEDINGS OF IEEE INFOCOM'93, Bd. 3, 28. März 1993 (1993-03-28) - 1. April 1993 (1993-04-01), Seiten 1382-1391, XP000419705 ISBN: 0-8186-3580-0
- KLEINROCK L ET AL: "HIERARCHICAL ROUTING FOR LARGE NETWORKS" COMPUTER NETWORKS, Bd. 1, 1977, Seiten 155-174, XP000775730 ISSN: 0376-5075

## Beschreibung

Die vorliegende Erfindung betrifft ein Verfahren zum Komprimieren eines Rufnummern-Datenbestands einer Telekommunikationsanlage sowie eine Telekommunikationsanlage, bei der dieses Verfahren eingesetzt wird.

Im Bereich der Telekommunikationstechnik ist es das Ziel, eine Kommunikationsverbindung möglichst über den kostengünstigsten Verbindungspfad aufzubauen. Die für eine Verbindung zu entrichtenden Gebühren hängen dabei in der Regel von der Entfernung zu dem Zielteilnehmer sowie der Nutzungsdauer des entsprechenden Verbindungspfads ab. Insbesondere können zielabhängige Tarifzonen vorgesehen sein, die unterschiedlichen Entfernungen zu dem gerufenen Zielteilnehmer zugeordnet sind. Für eine kostenoptimale Leitweglenkung in Telefonanlagen- oder Telefonnetzen in Ländern mit diesen zielabhängigen Tarifzonen ist es daher erforderlich, die von der jeweiligen Telefonanlage aus erreichbaren Ziele mit ihren als "Ortsnetzkennzahlen" (ONKZ) bezeichneten Zielkennzahlen in der jeweiligen Telefonanlage zu speichern. Bei jedem Gesprächsaufbau muß die Systemsteuerung der entsprechenden Telefonanlage die gesamte Menge dieser Zielkennzahlen durchsuchen, um entscheiden zu können, über welchen Verbindungspfad das Gespräch aus Kostengründen geleitet werden soll.

Aus der Druckschrift McAuley A.J. et al: "Fast Routing Table Lookup Using CAMs" Proceedings of IEEE INFOCOM 93 Band 3, 28.03.1993 - 01.04.1993, Seiten 1382 - 1391 ist ein Verfahren und eine Anordnung bekannt, mit der ein solcher Zugriff auf Zielkennzahlen beschleunigt durchgeführt werden kann. Dazu wird vorgeschlagen, die Zielkennzahlen in einer speziellen Hardware, sogenanntem "content adressable memory" (CAM) zu speichern, wodurch ein Zugriff auf die Zielkennzahlen mittels verschiedener Zugriffs-Strategien ("Fast Routing Table Lookup Technique") beschleunigt durchgeführt werden kann.

Aus Gründen der Auslastung der Systemsteuerung bzw. der als Systemsteuerung fungierenden Prozessoren der jeweiligen Telefonanlage ist es vorteilhaft, wenn die Anzahl der gespeicherten Zielkennzahlen so gering wie möglich gehalten wird. Dagegen ist es für eine kostenoptimale Leitweglenkung ("least cost routing", LCR) vorteilhaft, wenn bei der verbindungspfadermittlung eine möglichst große Anzahl von unterschiedli chen verbindungspfaden berücksichtigt werden kann, wofür hingegen das Speichern bzw. Verwalten einer möglichst großen Anzahl von Ortsnetzen bzw. entsprechenden Zielkennzahlen erforderlich ist. In Deutschland gibt es beispielsweise über 5100 verschiedene Ortsnetze mit entsprechenden, das jeweilige Ortsnetz kennzeichnenden Zielkennzahlen (Ortsnetzkennzahlen).

In bekannten Telekommunikationsanlagen wurde bisher versucht, möglichst alle verfügbaren Zielkennzahlen zu berücksichtigen. Die zu verwaltende Menge der Zielkennzahlen wurde nur dann zusammengefaßt, wenn aus Speichergründen der jeweiligen Telekommunikationsanlage eine bestimmte maximal Anzahl von Zielkennzahlen vorgegeben war. In diesem Fall wurden die Zielkennzahlen manuell zusammengefaßt, was aufgrund der großen Menge der Zielkennzahlen und der möglichen Auswirkungen bei einer fehlerhaften Konfiguration eine umfassende und zeitaufwendige Aufgabe darstellte. Eine optimale Zusammenfassung mit einer minimalen Anzahl von Zielkennzahlen, die dennoch eine kostenoptimale Leitweglenkung ermöglichten, wurde selten erreicht. Teilweise wurde eine derartige Zusammenfassung auch absichtlich vermieden, da dies der Übersichtlichkeit des Rufnummernhaushaltes bzw. des Rufnummern-Datenbestands abträglich war und bei einer späteren Änderung der Ortsnetzkennzahlen aufwendige manuelle Änderungen notwendig gewesen wären. In Deutschland verändert sich die Menge der verfügbaren Ortsnetzkennzahlen beispielsweise ca. alle 6 Monate.

Der vorliegenden Erfindung liegt daher die Aufgabe zugrunde, ein Verfahren bzw. eine Telekommunikationsanlage anzugeben, wobei der Rufnummern-Datenbestand, der Wählmuster mit bestimmten Zielkennzahlen (Ortsnetzkennzahlen) umfaßt, auf möglichst einfache Art und Weise komprimiert, d. h. minimiert, werden kann, wobei weiterhin eine kostenoptimale Verbindungspfadermittlung möglich ist. Insbesondere soll das erfindungsgemäße Verfahren eine Automatisierung der Komprimierung des Rufnummern-Datenbestands ermöglichen.

Diese Aufgabe wird gemäß der vorliegenden Erfindung durch ein Verfahren gemäß Anspruch 1 sowie durch eine Telekommunikationsanlage mit den Merkmalen des Anspruches 19 gelöst. Die Unteransprüche beschreiben jeweils bevorzugte und vorteilhafte Ausführungsformen der vorliegenden Erfindung, die ihrerseits zu einer möglichst einfachen Komprimierung des Rufnummern-Datenbestands der Telekommunikationsanlage beitragen.

Der Rufnummernhaushalt bzw. Rufnummern-Datenbestand einer Telekommunikationsanlage umfaßt mehrere Datensätze, wobei jeder Datensatz ein bestimmtes Wählmuster aufweist. Jedem Wählmuster bzw. Datensatz können bestimmte Attribute zugeordnet sein, die für die Verwaltung der einzelnen Wählmuster bzw. Datensätze und insbesondere für die Ermittlung des kostengünstigsten Verbindungspfads ausgewertet werden können.

Gemäß einem ersten Ausführungsbeispiel der vorliegenden Erfindung wird geprüft, ob das Wählmuster eines Datensatzes durch ein allgemeineres und kürzeres Wählmuster eines anderen Datensatzes abgedeckt ist. Hierzu ist Voraussetzung, daß das allgemeinere und kürzere Wählmuster dieselben Attribute aufweist wie das erstgenannte Wählmuster. Wurde ein entsprechendes allgemeineres und kürzeres Wählmuster gefunden, kann das erstgenannte Wählmuster bzw. der entsprechende Datensatz gelöscht werden.

Gemäß einem zweiten Ausführungsbeispiel der vorliegenden Erfindung wird überprüft, ob mehrere Wählmuster gespeichert sind, die eine übereinstimmende Anfangs-Ziffernfolge, d. h. einen übereinstimmenden Präfix, sowie übereinstimmende Attribute aufweisen. Ist dies der Fall, können die auf diese Weise ermittelten Wählmuster zu einem allgemeineren und kürzeren Wählmuster zusammengefaßt werden, d. h. eine Menge von Wählmustern wird durch ein komplementäres Wählmuster ersetzt, welches gleichzeitig sämtliche Wählmuster der zuvor genannten Menge abdeckt.

Gemäß einem dritten Ausführungsbeispiel der vorliegenden Erfindung werden allgemeine Wählmuster, die im Prinzip überflüssig sind, da bereits sämtliche speziellere Wählmuster, die unter das allgemeine Wählmuster fallen, separat definiert sind, gelöscht und eliminiert.

Die gemäß der vorliegenden Erfindung vorgeschlagenen Verfahren zur Komprimierung des Rufnummernhaushaltes von Telekommunikationsanlagen ermöglichen eine Automatisierung der Minimierung der Zielkennziffern (Ortsnetzkennzahlen). Vorzugsweise wird das Komprimierverfahren gemäß der vorliegenden Erfindung stets dann durchgeführt, wenn die Telekommunikationsanlage konfiguriert und für die Inbetriebnahme vorbereitet wird. Mit Hilfe der vorliegenden Erfindung wird gewährleistet, daß die für eine kostenoptimale Leitweglenkung ("least cost routing") verwendbare Anzahl von Zielkennziffern bzw. entsprechenden Datensätzen stets minimal ist, so daß der Speicherbedarf für diese Datensätze in der jeweiligen Telekommunikationsanlage ebenfalls minimiert werden kann. Aufgrund der minimalen Anzahl der zu verwaltenden Zielkennziffern bzw. Datensätze verringert sich die für einen Gesprächsaufbau benötigte Zeit. Die Konfiguration des Rufnummern-Datenbestands kann schnell, sicher und korrekt erfolgen, wobei insbesondere Änderungen und Anpassungen des Rufnummern-Datenbestands aufgrund des geringen Aufwands unproblematisch durchführbar sind.

In der Praxis können die gemäß der vorliegenden Erfindung vorgeschlagenen Verfahren miteinander kombiniert, d. h. nacheinander durchgeführt werden, wobei die einzelnen Verfahren insbesondere so oft angewendet werden bis keine weitere Minimierung bzw. Komprimierung des Rufnummern-Datenbestands erzielt werden kann.

Die vorliegende Erfindung wird nachfolgend anhand bevorzugter Ausführungsbeispiele unter Bezugnahme auf die Zeichnung näher erläutert.
- Figur 1a: zeigt eine beispielhafte Konfiguration eines Telefonnetzes mit drei Netzknoten,
- Figur 1b: zeigt einen beispielhaften Datenbestand innerhalb eines in Figur 1a gezeigten Netzknotens zur Beschreibung der einzelnen Zielrichtungen des in Figur 1a gezeigten Telefonnetzes,
- Figur 2: zeigt eine Darstellung zur Erläuterung eines ersten Ausführungsbeispiels der vorliegenden Erfindung,
- Figur 3a: zeigt eine Darstellung zur Erläuterung einer ersten Variante eines zweiten Ausführungsbeispiels der vorliegenden Erfindung,
- Figur 3b: zeigt eine Darstellung zur Erläuterung einer zweiten Variante des zweiten Ausführungsbeispiels der vorliegenden Erfindung, und
- Figur 4: zeigt eine Darstellung zur Erläuterung eines dritten Ausführungsbeispiels der vorliegenden Erfindung.

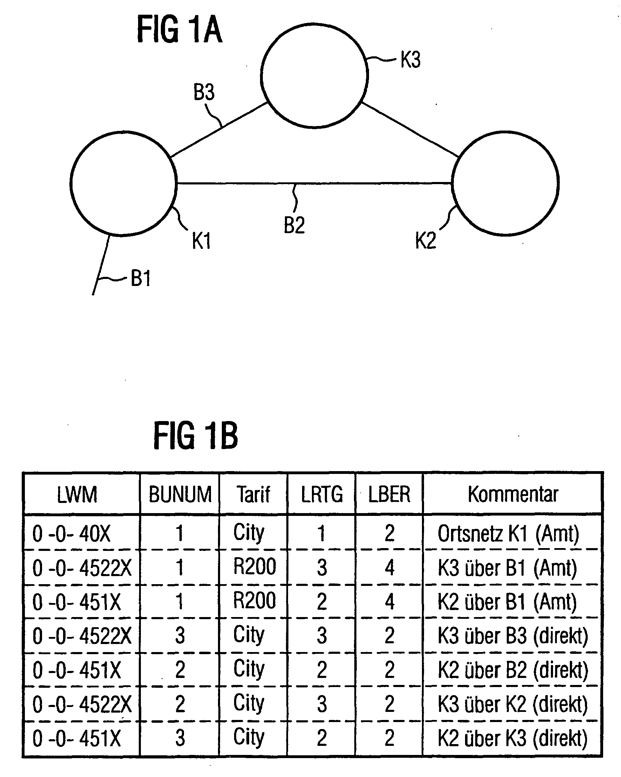

Zunächst soll anhand Figur 1a und 1b die Problematik der kostenoptimalen Leitweglenkung ("least cost routing", LCR) erläutert werden. Figur 1a zeigt beispielhaft ein Telefonnetz mit Netzknoten K1-K3, wobei nachfolgend davon ausgegangen wird, daß die Telefonanlage des Netzknotens K1 konfiguriert werden soll. Der Netzknoten K1 ist über eine erste Bündelleitung B1 an das öffentliche Netz, d. h. die Amtleitung, angeschlossen. Des weiteren besteht ausgehend von dem Netzknoten K1 eine direkte Querverbindung B2 zu dem Netzknoten K2 bzw. eine direkte Querverbindung B3 zu dem Netzknoten K3. Ergänzend sei angenommen, daß die beiden Netzknoten K2 und K3 ebenfalls über eine direkte Querverbindung miteinander verbunden sind.

Bei Eingehen einer Verbindungsanfrage am Netzknoten K1 besteht nunmehr die Aufgabe, in der entsprechenden Telefonanlage den kostengünstigsten Verbindungspfad zu dem gerufenen Zielteilnehmer zu ermitteln. Dabei besteht in der Regel die Tendenz, Amtsgespräche soweit wie möglich im eigenen Netz, d. h. im vorliegenden Beispiel über die direkten Querverbindungsleitungen B2 und B3, und erst in der Nähe des jeweiligen Zielortes über das öffentliche Netz zu führen. Im optimalen Fall können so Ferngespräche zu Kosten eines Ortsgesprächs geführt werden.

Damit eine derartige kostenoptimale Leitweglenkung möglich ist, muß zunächst in dem Netzknoten K1 die Konfiguration des jeweiligen Netzes, d. h. die zu den jeweiligen Zielorten möglichen Verbindungspfade, konfiguriert werden. Dies erfolgt insbesondere anhand der für die unterschiedlichen Zielorte charakteristischen Zielkennzahlen bzw. Ortsnetzkennzahlen (ONKZ).

Figur 1b zeigt einen vereinfachten Minimal-Rufnummernplan für die in Figur 1a gezeigte Netzkonfiguration. Dabei wird davon ausgegangen, daß der Knoten K1 zum Ortsnetz mit der Ortsnetzkennzahl "040", der Knoten K2 zum Ortsnetz mit der Ortsnetzkennzahl "0451" und der Knoten K3 zum Ortsnetz mit der Ortsnetzkennzahl "04522" gehört. Will ein Teilnehmer des Netzknotens K1 demnach beispielsweise einen Teilnehmer des Netzknotens K2 anrufen, muß er - gegebenenfalls nach Vorwählen einer Amtskennzahl (im vorliegenden Fall einer "0"), um auf die Leitungen B1-B3 zugreifen zu können - zunächst die Ortsnetzkennzahl "0451" und anschließend die dem gewünschten Endgerät zugeordnete Rufnummer wählen. Da im Rahmen der vorliegenden Erfindung lediglich die einzelnen Zielkennzahlen bzw. Ortsnetzkennzahlen von Interesse sind, wird als Platzhalter ein "X" verwendet, womit sämtliche der gewählten Ortsnetzkennzahlen entsprechenden Zielrufnummern abgedeckt sind.

Gemäß Figur 1b sind in der Telefonanlage des Netzknotens K1 separate Datensätze für die einzelnen von dem Netzknoten K1 ausgehenden Zielrichtungen in dem in Figur 1a gezeigten Netz gespeichert. Jeder Verbindungspfad bzw. jede Zielrichtung ist durch ein entsprechendes LCR-Wählmuster LWM beschrieben. Des weiteren ist für jeden Verbindungspfad die Nummer des entsprechenden Bündels, der zu entrichtende Tarif sowie zwei Attribute LRTG und LBER gespeichert. Das Attribut LRTG beschreibt die LCR-Übertragungsrichtung des entsprechenden Verbindungspfads im Telekommunikationssinn. Das Attribut LBER entspricht der LCR-Zugangsberechtigung, wobei ein Teilnehmer mit einem bestimmten LBER-Wert nur diejenigen Verbindungspfade benutzen kann, die denselben LBER-Wert aufweisen.

Gemäß Figur 1b kann ein Teilnehmer durch Wählen einer ersten "0" (als Amtskennziffer) sowie der Ortsnetzkennzahl "040" ausgehend von dem Knotenpunkt K1 über das Bündel B1 auf das öffentliche Netz zugreifen, wobei in diesem Fall der sogenannte City-Tarif zu entrichten ist. Diesem Verbindungspfad ist der LRTG-Wert=1 sowie der LBER-Wert=2 zugeordnet. Des weiteren bestehen zu dem Netzknoten K2 gemäß Figur 1a drei Verbindungen, die jeweils durch Wählen der Ortsnetzkennzahl "0451" (mit anschließender Zielrufnummer des gerufenen Teilnehmers) bei der Auswahl des kostengünstigsten Verbindungspfads berücksichtigt werden. Der erste Verbindungspfad führt ausgehend von dem Netzknoten K1 über das öffentliche Netz (Amt), d. h. über das Bündel B1, wobei in diesem Fall Gebühren für den sogenannten Region200-Tarif (R200) zu entrichten sind. Der zweite Verbindungspfad verläuft ausgehend von dem Netzknoten K1 über die direkte Querverbindung B2 zu dem Netzknoten K2, wobei in diesem Fall lediglich der City-Tarif zu entrichten ist. Der dritte Verbindungspfad läuft schließlich über die direkte Querverbindungsleitung B3 und den Netzknoten K3, wobei wiederum der City-Tarif zu entrichten ist. Alle Verbindungspfade zu dem Netzknoten K2 besitzen den LRTG-Wert "2". Analog gibt es ausgehend von dem Netzknoten K1 drei unterschiedliche Verbindungspfade zu dem Netzknoten K3, wobei die einzelnen Parameter Figur 1b entnommen werden können.

Da die über das Bündel B1 und das öffentliche Netz laufenden Verbindungspfade zu den Netzknoten K2 und K3 relativ teuer sind, sollen lediglich bestimmte Teilnehmer auf diese Verbindungspfade zugreifen können, d. h. lediglich Teilnehmer mit LBER=4 können die über das Bündel B1 und das öffentliche Netz verlaufenden Verbindungspfade zu den Netzknoten K2 und K3 nützen. Allen anderen Verbindungspfaden ist der LBER-Wert=2 zugeordnet, so daß jeder Teilnehmer mit LBER=2 diese Verbindungspfade nützen kann.

Bei Eingehen einer Verbindungsanfrage im Netzknoten K1 ermittelt nunmehr die Telekommunikationsanlage anhand der in Figur 1b gezeigten Daten den kostengünstigsten Verbindungspfad zu dem gewünschten Zielteilnehmer.

Ausgehend von der obigen Beschreibung wird deutlich, daß bei einer Vielzahl von unterschiedlichen Ortsnetzkennzahlen und Ortsnetzen bzw. entsprechenden Wählmustern ein sehr großer Datenbestand in der jeweiligen Telekommunikationsanlage zu verwalten ist. Daher werden gemäß der vorliegenden Erfindung automatische Komprimierverfahren vorgeschlagen, mit deren Hilfe der zu verwaltende Rufnummern-Datenbestand bzw. Rufnummernhaushalt minimiert werden kann, wobei weiterhin eine effektive kostenoptimale Leitweglenkung (LCR) gewährleistet wird. Dies ist insbesondere für diejenigen Telekommunikationsanlagen sinnvoll, die lediglich eine beschränkte Anzahl von unterschiedlichen Wählmustern verwalten bzw. speichern können.

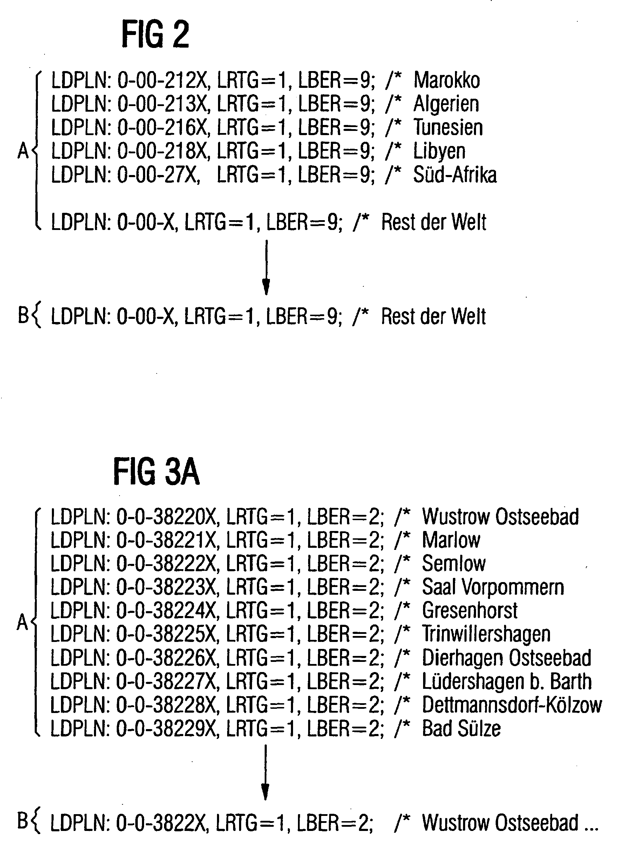

Anhand Figur 2-4 werden nachfolgend verschiedene Ausführungsbeispiele der vorliegenden Erfindung erläutert, wobei die dargestellten Verfahren jeweils rechnergestützt in der jeweiligen Telekommunikations- bzw. Telefonanlage automatisch durchgeführt werden. Dabei unterstützen die in der jeweiligen Telefonanlage eingesetzten Rechnermittel vorzugsweise sämtliche nachfolgend beschriebenen Verfahren, so daß die einzelnen Verfahren nacheinander so oft durchgeführt werden können bis keine weitere Minimierung bzw. Komprimierung mehr möglich ist.

Bei der Erläuterung der unterschiedlichen Ausführungsbeispiele der vorliegenden Erfindung wird nachfolgend davon ausgegangen, daß die einzelnen Wählmuster vollständig einschließlich der Amtskennziffer sowie gegebenenfalls mit zusätzlich erforderlichen Trennzeichen für den ISDN-Amtsanschluß bezüglich des jeweiligen Datensatzes eingegeben werden.

Figur 2 zeigt im oberen Teil einen vereinfachten Ausgangs-Rufnummernplan (least cost routing dial plan, LDPLN) mit mehreren LDPLN-Einträgen oder LDPLN-Datensätzen. Jeder Datensatz umfaßt ein bestimmtes Wählmuster mit entsprechenden Attributen, wobei gemäß den nachfolgenden Beispielen davon ausgegangen wird, daß die zuvor erläuterten Parameter LRTG und LBER als Attribute verwendet werden. Hinter jedem Datensatz befindet sich, getrennt durch ein "/*", ein kurzer Kommentar zu dem jeweiligen Datensatz bzw. Wählmuster. So ist beispielsweise das in der ersten Zeile gespeicherte Wählmuster erforderlich, um ein Ortsnetz in Marokko anwählen zu können. Des weiteren umfaßt der Datenbereich A ein in der letzten Zeile dargestelltes allgemeines Wählmuster "0-00-X", welches gemäß dem vorliegenden Beispiel für sämtliche restlichen Ortsnetze der Welt vorgesehen ist. Wie bereits zuvor erläutert worden ist, wird das Zeichen "X" als Platzhalter verwendet und umfaßt somit jede beliebige angehängte Ziffer oder Ziffernfolge.

Gemäß dem ersten Ausführungsbeispiel der vorliegenden Erfindung ist vorgesehen, die vorhandene Anzahl an Wählmuster dadurch zu reduzieren, daß geprüft wird, ob Wählmuster vorhanden sind, die durch ein ebenfalls vorhandenes allgemeineres Wählmuster abgedeckt sind. Insbesondere wird dabei geprüft, ob die in Frage kommenden Wählmuster eine identische Anfangs-Zeichenfolge bzw. einen identischen Präfix und identische Attribute wie das allgemeinere Wählmuster umfassen. Im vorliegenden Fall umfaßt das im Datenbereich A in der letzten Zeile dargestellte allgemeine Wählmuster "0-00-X" eine Anfangs-Zeichenfolge, die in allen übrigen Wählmustern identisch enthalten ist. Des weiteren entsprechen die LRTG- und LBER-Attribute den jeweiligen Attributen der übrigen Wählmuster, so daß gemäß Figur 2 alle speziellen Wählmuster für die individuellen Länder ersatzlos gestrichen werden können, weil sie bereits durch das allgemeine Wählmuster "0-00-X" abgedeckt sind. Voraussetzung für dieses Verfahren ist wie bereits erwähnt worden ist, daß die Attribute bzw. Parameter LRTG und LBER zwischen den speziellen Wählmustern und dem allgemeinen Wählmuster übereinstimmen, da ansonsten die einzelnen Wählmuster nicht zusammengefaßt werden können. Gemäß Figur 2 entsteht somit aus dem im oberen Teil von Figur 2 dargestellten Datenbereich A der im unteren Teil von Figur 2 gezeigte komprimierte Datenbereich B, der gemäß dem vorliegenden Beispiel nur noch einen einzigen Datensatz mit dem allgemeinen Wählmuster "0-00-X" umfaßt.

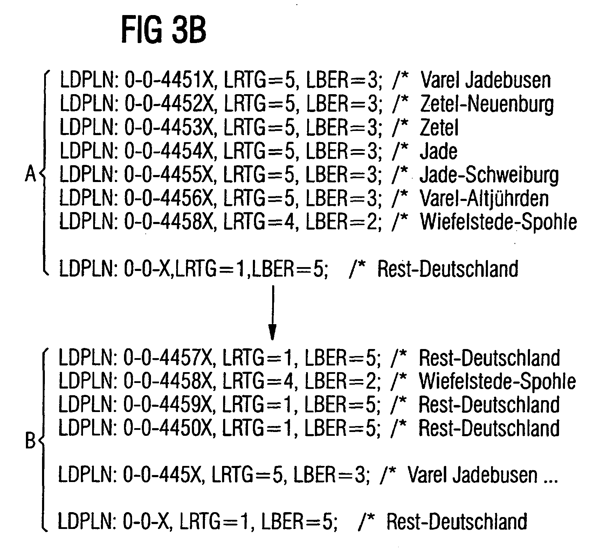

Figur 3a und 3b zeigen Darstellungen zur Verdeutlichung eines zweiten Ausführungsbeispiels der vorliegenden Erfindung. Gemäß diesem zweiten Ausführungsbeispiel wird geprüft, ob Datensätze mit identischen Attributen vorhanden sind, die durch ein allgemeineres neues Wählmuster ersetzt werden können. Dieses allgemeinere Wählmuster umfaßt dann nur noch den übereinstimmenden Präfix der erstgenannten Wählmuster mit dem nachfolgenden Platzhalter "X".

Gemäß Figur 3a weist der Ausgangs-Datenbestand der Telefonanlage mehrere LDPLN-Einträge auf, die jeweils ein bestimmtes Wählmuster umfassen, wobei jedem Wählmuster die gleiche LCR-Berechtigung (LBER) und die gleiche LCR-Richtung (LRTG) zugeordnet ist. Da sämtliche Wählmuster bzw. die entsprechenden Ortsnetzkennzahlen den gleichen Präfix "0-0-3822" umfassen, können diese Wählmuster durch das allgemeinere Wählmuster "0-0-3822X" ersetzt werden.

Das allgemeinere Wählmuster erhält dieselben Attributwerte wie diejenigen Wählmuster, die zusammengefaßt worden sind. Gemäß dem in Figur 3a dargestellten Beispiel werden somit die zehn Einträge des Ausgangs-Datensatzes A in einen einzigen Eintrag B umgewandelt, was einer Einsparung von 90% entspricht.

Allgemein können Wählmuster effektiv eingespart werden, wenn sechs oder mehr Wählmuster den gleichen Präfix, d. h. dieselbe Anfangs-Ziffernfolge und dieselben Attribute aufweisen. Figur 3b zeigt ein entsprechendes Beispiel, bei dem die ersten sechs LDPLN-Einträge des Ausgangs-Datenbereichs A durch das allgemeine Wählmuster "0-0-445X" mit den Attributen LRTG=5 und LBER=3 ersetzt werden können. Dieses allgemeinere Wählmuster würde jedoch auch die Wählmuster "0-0-4457X", "0-0-4459X" und "0-0-4450X" umfassen, die jedoch bisher noch nicht im Datensatz A separat definiert waren. Demzufolge werden bei der Erzeugung des allgemeineren Wählmusters "0-0-445X" für die zuvor genannten bisher noch nicht definierten Wählmuster, die auch unter das neue allgemeinere Wählmuster fallen, separate LDPLN-Einträge angelegt, die jedoch die Attribute des ebenfalls bereits vorhandenen sehr allgemeinen Wählmusters "0-0-X" zugewiesen bekommen und dementsprechend die Werte LRTG=1 und LBER=5 aufweisen. Wählmuster, die zwar eine identische Anfangs-Ziffernfolge wie das neu generierte allgemeine Wählmuster "0-0-445X" aufweisen, jedoch von den übrigen zusammengefaßten Wählmustern abweichende Attributwerte besitzen, werden unverändert beibehalten. Dies trifft bei dem in Figur 3b dargestellten Beispiel insbesondere auf das Wählmuster "0-0-4458X" zu.

Auf diese Weise wird der in Figur 3b gezeigte reduzierte Datensatz B erhalten, der anstelle der ursprünglichen sieben Wählmuster nur noch fünf Datensätze mit entsprechenden Wählmustern umfaßt, was eine Einsparung von fast 30% entspricht.

Bei dem in Figur 3b dargestellten Ausführungsbeispiel wurde davon ausgegangen, daß bei Vorhandensein eines sehr allgemeinen Wählmusters (in Figur 3b des Wählmusters "0-0-X") denjenigen Wählmustern, denen bisher noch kein separater Datensatz zugeordnet war und die jedoch unter das neu generierte allgemeine Wählmuster (in Figur 3b "0-0-445X") fallen, neue Datensätze mit den Attributen eines bereits bestehenden sehr allgemeinen Wählmusters (in Figur 3b "0-0-X") zugeordnet werden. Statt dessen kann jedoch auch vorgesehen sein, daß standardmäßig diese Wählmuster, obwohl sie ursprünglich nicht eingegeben worden waren, während der Optimierung bzw. Komprimierung wie die anderen Rufmuster mit demselben Präfix behandelt werden, so daß für diese Wählmuster keine separaten Datensätze mit unterschiedlichen Attributen erzeugt werden, sondern diese Wählmuster ebenfalls durch das neu generierte allgemeine Wählmuster (in Figur 3b "0-0-445X") mit den entsprechenden Attributen abgedeckt werden.

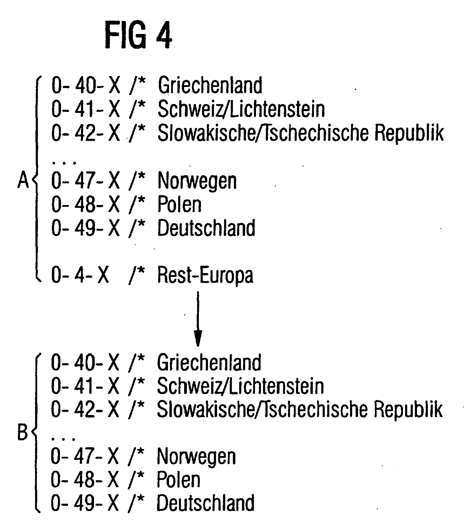

Figur 4 zeigt ein drittes Ausführungsbeispiel der vorliegenden Erfindung.

Gemäß diesem dritten Ausführungsbeispiel wird geprüft, ob ein allgemeines Wählmuster vorhanden ist, welches mehrere spezielle Wählmuster abdeckt, die jedoch jeweils durch separate Datensätze bereits berücksichtigt sind. Auf diese Weise können unnötige allgemeine Wählmuster gelöscht und eliminiert werden.

Gemäß Figur 4 umfaßt der Ausgangs-Datensatz A beispielsweise zehn Wählmuster "0-40-X" bis "0-49-X", denen unterschiedliche Ortsnetze in Europa zugeordnet sind. Des weiteren sei ein allgemeines Wählmuster "0-4-X" abgespeichert, welches für Resteuropa vorgesehen ist. Dieses allgemeine Wählmuster "0-4-X" ist jedoch unabhängig von der Konfiguration dieses Wählmusters, d. h. unabhängig von den entsprechenden Attributen des Datensatzes, unnötig, da für sämtliche unter das entsprechende allgemeine Wählmuster "0-4-X" fallende Möglichkeiten separate und spezielle Dateneinträge vorhanden sind. Demzufolge kann dieses allgemeine Wählmuster "0-4-X" niemals bei der optimalen Leitungsweglenkung berücksichtigt werden, so daß dieser Eintrag gelöscht werden kann und gemäß dem dritten Ausführungsbeispiel der im unteren Teil von Figur 4 dargestellte reduzierte Datensatz B erhalten wird.

Eine dem Datensatz A von Figur 4 entsprechende überflüssige Konfiguration wird vom Anwender wohl eher selten durchgeführt werden. Derartige Konfigurationen können jedoch nach Durchführung der in Figur 2 und 3 dargestellten Komprimierverfahren entstehen, so daß es insbesondere vorteilhaft ist, das in Figur 4 gezeigte Komprimierverfahren nachfolgend zu den in Figur 2 und 3 gezeigten Komprimierverfahren durchzuführen.

Bei den vorhergehenden Ausführungsbeispielen wurde jeweils davon ausgegangen, daß die einzelnen Wählmuster bis zu ihrem (von hinten gesehen) letzten Trennstich minimiert werden. Damit soll verhindert werden, daß die einzelnen Wählmuster verfälscht werden und von der den jeweiligen Wählmustern zugeordneten Wahlregel, die die Umsetzung des Wählmusters für die Amtsleitung definiert, nicht mehr interpretiert werden können. Demzufolge werden die Wählmuster bei der Eingabe mit einem "X" und nicht mit einem "-X" beendet. Andererseits kann vorgesehen sein, daß durch einen Abschluß mit "-X" das jeweilige Wählmuster gegen eine Minimierung bzw. Komprimierung gesperrt wird, so daß der Benutzer wählmusterspezifisch die Komprimierung freigeben oder sperren kann.

Ergänzend sei darauf hingewiesen, daß aus Gründen der Anwendungsfreundlichkeit der jeweiligen Telekommunikationsanlage versucht wird, auch bei einer Komprimierung von Wählmustern einen jeweils passenden Kommentar zu erhalten. Werden mehrere Wählmuster durch ein bereits bestehendes allgemeineres Wählmuster ersetzt, wird der Kommentar des allgemeineren Wählmusters beibehalten (vgl. Figur 2). Werden hingegen mehrere Wählmuster zusammengefaßt und durch ein neues allgemeineres Wählmuster ersetzt, wird für das neue allgemeinere Wählmuster der Kommentar des Wählmusters mit dem (numerisch) kleinsten Präfix verwendet und durch Anhängen von "..." markiert (vgl. Figur 3a und 3b). Werden bei dieser Vorgehensweise für Wählmuster, die auch unter das neu generierte allgemeine Wählmuster fallen, jedoch bisher nicht definiert waren, neue Datensätze erzeugt, indem ein bereits bestehendes kurzes allgemeines Wählmuster verlängert wird, wird der Kommentar des bereits bestehenden kurzen allgemeinen Wählmusters auch für das neu generierte verlängerte Wählmuster verwendet (vgl. Figur 3b "Rest-Deutschland" bezüglich der generierten Wählmuster "0-0-4457X", "0-0-4459X" und "0-0-4450X").

## Patentansprüche

1. Verfahren zum Komprimieren eines Rufnummern-Datenbestands (A) einer Telekommunikationsanlage,
wobei der Rufnummern-Datenbestand (A) mehrere Datensätze mit jeweils einem bestimmten Wählmuster aufweist, und
wobei jedes Wählmuster eine bestimmte Zielkennzahl eines Telekommunikationsnetzes umfaßt und jedem Wählmuster mindestens ein bestimmtes Attribut für die Verwaltung der wählmuster in der Telekommunikationsanlage zugeordnet ist,
**dadurch gekennzeichnet,**
**dass** mehrere Wählmuster mit identischen Attributen zu einem allgemeinen Wählmuster zusammengefasst werden.

2. Verfahren nach Anspruch 1,
**gekennzeichnet durch** die Schritte
a) Überprüfen, ob das Wählmuster eines ersten Datensatzes durch ein allgemeineres Wählmuster eines zweiten Datensatzes mit identischen Attributen abgedeckt ist, und
b) Löschen des ersten Datensatzes, falls das Ergebnis der im Schritt a) durchgeführten Überprüfung positiv ist.

3. Verfahren nach Anspruch 2,
**dadurch gekennzeichnet,**
**daß** die Schritte a) und b) für alle in der Telekommunikationsanlage gespeicherten Datensätze des Rufnummern-Datenbestands (A) durchgeführt werden.

4. Verfahren nach Anspruch 2 oder 3,
**dadurch gekennzeichnet,**
**daß** das allgemeinere Wählmuster des zweiten Datensatzes eine identische Anfangs-Ziffernfolge wie das Wählmuster des ersten Datensatzes umfaßt.

5. Verfahren nach Anspruch 1,
**gekennzeichnet durch** die Schritte
a) Suchen nach mehreren Datensätzen des Rufnummern-Datenbestandes (A), deren Wählmuster eine übereinstimmende Anfangs-Ziffernfolge aufweisen und deren Wählmustern identische Attribute zugeordnet sind,
b) Zusammenfassen der im Schritt a) gefundenen Datensätze zu einem Datensatz, der ein allgemeineres Wählmuster als die gefundenen Datensätze aufweist, wobei das allgemeinere Wählmuster die übereinstimmende Anfangs-Ziffernfolge der Wählmuster der im Schritt a) gefundenen Datensätze umfaßt und dem allgemeinen Wählmuster die identischen Attribute wie den Wählmustern der im Schritt a) gefundenen Datensätze zugeordnet sind.

6. Verfahren nach Anspruch 5,
**dadurch gekennzeichnet,**
**daß** im Schritt b) ein neuer Datensatz mit dem allgemeinen Wählmuster erzeugt und die im Schritt a) gefundenen Datensätze gelöscht werden.

7. Verfahren nach Anspruch 5 oder 6,
**dadurch gekennzeichnet,**
**daß** das allgemeinere Wählmuster die übereinstimmende Anfangs-Ziffernfolge sowie einen Platzhalter für voneinander abweichende Endziffern der Wählmuster der im Schritt a) gefundenen Datensätze umfaßt.

8. Verfahren nach einem der Ansprüche 5 - 7,
**dadurch gekennzeichnet,**
**daß** Datensätze mit Wählmustern, die ebenfalls die übereinstimmende Anfangs-Ziffernfolge wie die Wählmuster der im Schritt a) gefundenen Datensätze umfassen und denen jedoch nicht dieselben Attribute zugeordnet sind, unverändert beibehalten werden.

9. Verfahren nach einem der Ansprüche 5-8,
**dadurch gekennzeichnet,**
**daß** für Wählmuster, die ebenfalls die übereinstimmende Anfangs-Ziffernfolge des allgemeineren Wählmusters umfassen, jedoch noch nicht in einem bestehenden Datensatz berücksichtigt sind, jeweils ein neuer Datensatz erzeugt wird, wobei dem neuen Datensatz die Attribute eines bereits bestehenden Datensatzes von einem weiteren allgemeineren Wählmuster zugeordnet werden.

10. Verfahren nach einem der Ansprüche 5-8,
**dadurch gekennzeichnet,**
**daß** für Wählmuster, die ebenfalls die übereinstimmende Anfangs-Ziffernfolge des allgemeineren Wählmusters umfassen, jedoch noch nicht in einem bestehenden Datensatz berücksichtigt sind, kein neuer Datensatz erzeugt wird, so daß diese Wählmuster auch durch das im Schritt b) erzeugte allgemeinere Wählmuster abgedeckt sind.

11. Verfahren nach einem der Ansprüche 1-10,
**dadurch gekennzeichnet,**
**daß** die jedem Wählmuster zugeordneten Attribute eine Übertragungsrichtung (LRTG) über das mit der Telekommunikationsanlage verbundene Telekommunikationsnetz zu einem dem jeweiligen Wählmuster entsprechenden Zielknoten (K1-K3) und/oder eine Zugangsberechtigung (LBER) für die Benutzung einer zu dem dem jeweiligen Wählmuster entsprechenden Zielknoten (K1-K3) führenden Verbindung (B1-B3) umfassen.

12. Verfahren nach Anspruch 1,
**gekennzeichnet durch** die Schritte
a) Überprüfen, ob ein Datensatz mit einem ersten Wählmuster vorhanden ist, welches mehrere speziellere Wählmuster abdeckt, wobei jedoch separate Datensätze für alle von dem ersten Wahlmuster abgedeckten spezielleren zweiten Wählmuster vorhanden sind, und
b) Löschen des Datensatzes des ersten Wählmusters, falls das Ergebnis der im Schritt a) durchgeführten Überprüfung positiv ist.

13. Verfahren nach Anspruch 12,
**dadurch gekennzeichnet,**
**daß** das erste Wählmuster eine identische Anfangs-Ziffernfolge wie die spezielleren zweiten Wählmuster sowie einen Platzhalter für voneinander abweichende Endziffern der spezielleren zweiten Wählmuster umfaßt.

14. Verfahren nach Anspruch 12 oder 13,
**dadurch gekennzeichnet,**
**daß** der Schritt b) unabhängig von den dem ersten Wählmuster zugeordneten Attributen durchgeführt wird, falls das Ergebnis der im Schritt a) durchgeführten Überprüfung positiv ist.

15. Verfahren nach Anspruch 1,
**dadurch gekennzeichnet,**
**daß** das Verfahren nach einem der Ansprüche 2-4 in Kombination mit dem Verfahren nach einem der Ansprüche 5-11 und dem Verfahren nach einem der Ansprüche 12-14 wiederholt durchgeführt wird bis keine weitere Komprimierung des Rufnummern-Datenbestands (A) mehr möglich ist.

16. Verfahren nach einem der Ansprüche 1-11 oder einem der Ansprüche 14 oder 15,
**dadurch gekennzeichnet,**
**daß** die den Wählmustern zugeordneten Attribute in der Telekommunikationsanlage für einen kostenoptimierten Verbindungsaufbau zu einem dem jeweiligen Wählmuster entsprechenden Zielknoten des Telekommunikationsnetzes, an das die Telekommunikationsanlage angeschlossen ist, verwendet werden.

17. Verfahren nach einem der vorhergehenden Ansprüche,
**dadurch gekennzeichnet,**
**daß** jeder Datensatz bzw. das entsprechende Wählmuster für eine mögliche Verbindung zwischen der Telekommunikationsanlage und einem dem jeweiligen Wählmuster entsprechenden Zielknoten des Telekommunikationsnetzes, an das die Telekommunikationsanlage angeschlossen ist, vorgesehen ist.

18. Verfahren nach Anspruch 17,
**dadurch gekennzeichnet,**
**daß** die in einem Wählmuster enthaltene Zielkennzahl einem den jeweiligen Zielknoten aufweisenden Ortsnetz des Telekommunikationsnetzes entspricht.

19. Telekommunikationsanlage,
mit Speichermitteln zum Speichern eines Rufnummern-Datenbestands (A), der mehrere Datensätze mit jeweils einem bestimmten Wählmuster aufweist, wobei jedes Wählmuster eine bestimmte Zielkennzahl eines Telekommunikationsnetzes umfaßt und jedem Wählmuster mindestens ein bestimmtes Attribut für die Verwaltung der Wählmuster in der Telekommunikationsanlage zugeordnet ist, und
mit Mitteln zum Komprimieren des in den Speichermitteln gespeicherten Rufnummern-Datenbestands (A) gemäß einem Verfahren nach einem der Ansprüche 1-18.

20. Telekommunikationsanlage nach Anspruch 19,
**dadurch gekennzeichnet,**
**daß** die Mittel zum Komprimieren des Rufnummern-Datenbestands (A) einen Rechner zum rechnergestützten Komprimieren des Rufnummern-Datenbestands (A) umfassen.

## Claims

1. Method for compression of a telephone number database (A) in a telecommunications system,
the telephone number database (A) having a plurality of data records each having a specific dialing pattern, and
each dialing pattern comprising a specific destination code number for a telecommunications network, and each dialing pattern being assigned at least one specific attribute for controlling the dialing pattern in the telecommunications system,
**characterized**
**in that** a plurality of dialing patterns with identical attributes are combined to form a general dialing pattern.

2. Method according to claim 1,
**characterized by** the following steps:
a) checking whether the dialing pattern of a first data record is covered by a more general dialing pattern of a second data record having identical attributes, and
b) deletion of the first data record if the result of the check carried out in step a) is positive.

3. Method according to claim 2,
**characterized in that** steps a) and b) are carried out for all those data records in the telephone number data base (A) which are stored in the telecommunications system.

4. Method according to claim 2 or 3,
**characterized**
**in that** the more general dialing pattern of the second data record comprises an initial character sequence which is identical to the dialing pattern of the first data record.

5. Method according to claim 1,
**characterized by** the following steps:
a) searching for a plurality of data records in the telephone number database (A) whose dialing patterns have a matching initial character sequence, and whose dialing patterns are assigned identical attributes,
b) combining the data records found in step a) to form a data record which has a more general dialing pattern than the data records found, the more general dialing pattern comprising the matching initial character sequence of the dialing patterns of the data records found in step a), and the more general dialing pattern being assigned identical attributes to those for the dialing patterns of the data records found in step a).

6. Method according to claim 5,
**characterized**
**in that**, in step b), a new data record having the general dialing pattern is produced, and the data records found in step a) are deleted.

7. Method according to claim 5 or 6,
**characterized**
**in that** the more general dialing pattern comprises the matching initial character sequence as well as a spacekeeper for mutually different end characters of the dialing patterns of the data records found in step a).

8. Method according to one of claims 5 - 7,
**characterized**
**in that** data records having dialing patterns which likewise comprise the initial character sequence which matches the dialing pattern of the data records found in step a) but which are not assigned the same attributes remain unchanged.

9. Method according to one of claims 5 - 8,
**characterized**
**in that** a new data record is in each case produced for dialing patterns which likewise comprise the initial character sequence matching the more general dialing pattern but have not yet been taken into account in an existing data record, the new data record being assigned the attributes of an already existing data record from a further more general dialing pattern.

10. Method according to one of claims 5 - 8,
**characterized**
**in that** no new data record is produced for dialing patterns which likewise comprise the initial character sequence matching the more general dialing pattern but have not yet been taken into account in an existing data record, so that these dialing patterns are also covered by the more general dialing pattern produced in step b).

11. Method according to one of claims 1 - 10,
**characterized**
**in that** the attributes assigned to each dialing pattern comprise a transmission direction (LRTG) via the telecommunications network which is connected to the telecommunications system, to a destination node (K1ÄK3) which corresponds to the respective dialing pattern, and/or an access authorization (LBER) for use of a connection (B1ÄB3) which leads to the destination node (K1ÄK3) which corresponds to the respective dialing pattern.

12. Method according to claim 1,
**characterized by** the following steps
a) checking whether there is a data record having a first dialing pattern which covers a plurality of more specific dialing patterns, but with separate data records for all the more specific second dialing patterns which are covered by the first dialing pattern, and
b) deleting the data record of the first dialing pattern if the result of the check carried out in step a) is positive.

13. Method according to claim 12,
**characterized**
**in that** the first dialing pattern comprises an identical initial character sequence to the more specific second dialing patterns, as well as a spacekeeper for mutually differing end characters of the more specific second dialing patterns.

14. Method according to claim 12 or 13,
**characterized**
**in that** step b) is carried out irrespective of the attributes which are assigned to the first dialing pattern, if the result of the check carried out in step a) is positive.

15. Method according to claim 1,
**characterized**
**in that** the method according to one of claims 2 - 4 is carried out repeatedly in conjunction with the method according to one of claims 5 - 11 and the method according to one of claims 12 - 14 until the telephone number database (A) cannot be compressed any further.

16. Method according to one of claims 1 - 11 or one of claims 14 or 15,
**characterized**
**in that** the attributes which are assigned to the dialing patterns in the telecommunications system are used for least-cost call origination to a destination node which corresponds to the respective dialing pattern in the telecommunications network to which the telecommunications system is connected.

17. Method according to one of the preceding claims,
**characterized**
**in that** each data record and the corresponding dialing pattern are provided for a possible connection between the telecommunications system and a destination node which corresponds to the respective dialing pattern in the telecommunications network to which the telecommunications system is connected.

18. Method according to claim 17,
**characterized**
**in that** the destination code number which is contained in a dialing pattern corresponds to a local network which has the respective destination node in the telecommunications network.

19. Telecommunications system,
having memory means for storing a telephone number database (A) which has a plurality of data records each having a specific dialing pattern, each dialing pattern comprising a specific destination code number of a telecommunications network, and each dialing pattern being assigned at least one specific attribute for controlling the data patterns in the telecommunications system, and
having means for compression of the telephone number database (A) stored in the memory means, in accordance with a method according to one of claims 1 - 18.

20. Telecommunications system according to claim 19,
**characterized**
**in that** the means for compression of the telephone number database (A) comprise a computer for computer-aided compression of the telephone number database (A).

## Revendications

1. Procédé de compression d'un ensemble de données de numéros d'appel (A) d'une installation de télécommunication,
l'ensemble de données de numéros d'appel (A) comportant plusieurs blocs de données avec à chaque fois un certain modèle de numérotation, et
chaque modèle de numérotation comprenant un certain indicatif de destination d'un réseau de télécommunication et au moins un certain attribut étant associé à chaque modèle de numérotation pour la gestion des modèles de numérotation dans l'installation de télécommunication,
**caractérisé par le fait que**
plusieurs modèles de numérotation ayant des attributs identiques sont réunis en un modèle de numérotation général.

2. Procédé selon la revendication 1,
**caractérisé par** les étapes suivantes :
a) vérifier si le modèle de numérotation d'un premier bloc de données est couvert par un modèle de numérotation plus général d'un deuxième bloc de données ayant des attributs identiques, et
b) effacer le premier bloc de données si le résultat de la vérification effectuée à l'étape a) est positif.

3. Procédé selon la revendication 2,
**caractérisé par le fait que** les étapes a) et b) sont réalisées pour tous les blocs de données, mémorisés dans l'installation de télécommunication, de l'ensemble de données de numéros d'appel (A).

4. Procédé selon la revendication 2 ou 3,
**caractérisé par le fait que** le modèle de numérotation plus général du deuxième bloc de données comprend une suite de chiffres de début identique à celle du modèle de numérotation du premier bloc de données.

5. Procédé selon la revendication 1,
**caractérisé par** les étapes suivantes:
a) rechercher plusieurs blocs de données de l'ensemble de données de numéros d'appel (A) dont les modèles de numérotation comportent une suite de chiffres de début coïncidente et aux modèles de numérotation desquels sont associés des attributs identiques,
b) réunir les blocs de données trouvés à l'étape a) en un bloc de données qui comporte un modèle de numérotation plus général que les blocs de données trouvés, le modèle de numérotation plus général comprenant alors la suite de chiffres de début coïncidente du modèle de numérotation des blocs de données trouvés à l'étape a) et les attributs identiques à ceux des modèles de numérotation des blocs de données trouvés à l'étape a) étant alors associés au modèle de numérotation général.

6. Procédé selon la revendication 5,
**caractérisé par le fait que**, à l'étape b), on produit un nouveau bloc de données avec le modèle de numérotation général et on efface les blocs de données trouvés à l'étape a).

7. Procédé selon la revendication 5 ou 6,
**caractérisé par le fait que** le modèle de numérotation plus général comprend la suite de chiffres de début coïncidente ainsi qu'un élément réservant de la place pour des chiffres de fin différents les uns des autres des modèles de numérotation des blocs de données trouvés à l'étape a).

8. Procédé selon l'une des revendications 5 à 7,
**caractérisé par le fait que** des blocs de données avec des modèles de numérotation qui comprennent également la suite de chiffres de début coïncidente comme le modèle de numérotation des blocs de données trouvés à l'étape a) et auxquels les mêmes attributs ne sont toutefois pas associés sont conservés sans changement.

9. Procédé selon l'une des revendications 5 à 8,
**caractérisé par le fait que**, pour des modèles de numérotation qui comprennent également la suite de chiffres de début coïncidente du modèle de numérotation plus général mais qui ne sont pas encore pris en compte dans un bloc de données existant, on produit à chaque fois un nouveau bloc de données, les attributs d'un bloc de données déjà existant d'un autre modèle de numérotation plus général étant alors associés au nouveau bloc de données.

10. Procédé selon l'une des revendications 5 à 8,
**caractérisé par le fait que**, pour des modèles de numérotation qui comprennent également la suite de chiffres de début coïncidente du modèle de numérotation plus général mais qui ne sont pas encore pris en compte dans un bloc de données existant, on ne produit pas de nouveau bloc de données de sorte que ces modèles de numérotation sont aussi couverts par le modèle de numérotation plus général produit à l'étape b).

11. Procédé selon l'une des revendications 1 à 10,
**caractérisé par le fait que** les attributs associés à chaque modèle de numérotation comprennent un sens de transmission (LRTG) dans le réseau de télécommunication relié à l'installation de télécommunication vers un noeud de destination (K1 à K3) correspondant au modèle de numérotation respectif et/ou une autorisation d'accès (LBER) pour l'utilisation d'une liaison (B1 à B3) conduisant au noeud de destination (K1 à K3) correspondant au modèle de numérotation respectif.

12. Procédé selon la revendication 1,
**caractérisé par** les étapes suivantes :
a) vérifier s'il existe un bloc de données avec un premier modèle de numérotation qui couvre plusieurs modèles de numérotation plus spéciaux, des blocs de données séparés existant toutefois pour tous les deuxièmes modèles de numérotation plus spéciaux couverts par le premier modèle de numérotation, et
b) effacer le bloc de données du premier modèle de numérotation si le résultat de la vérification effectuée à l'étape a) est positif.

13. Procédé selon la revendication 12,
**caractérisé par le fait que** le premier modèle de numérotation comprend une suite de chiffres de début identique à celle des deuxièmes modèles de numérotation plus spéciaux ainsi qu'un élément réservant de la place pour des chiffres de fin différents les uns des autres des deuxièmes modèles de numérotation plus spéciaux.

14. Procédé selon la revendication 12 ou 13,
**caractérisé par le fait que** l'étape b) est réalisée indépendamment des attributs associés _au premier modèle de numérotation si le résultat de la vérification effectuée à l'étape a) est positif.

15. Procédé selon la revendication 1,
**caractérisé par le fait que** le procédé selon l'une des revendications 2 à 4 en combinaison avec le procédé selon l'une des revendications 5 à 11 et avec le procédé selon l'une des revendications 12 à 14 est exécuté de manière répétée jusqu'à ce qu'aucune nouvelle compression de l'ensemble de données de numéros d'appel (A) ne soit plus possible.

16. Procédé selon l'une des revendications 1 à 11 ou selon l'une des revendications 14 ou 15,
**caractérisé par le fait que** les attributs associés aux modèles de numérotation sont utilisés dans l'installation de télécommunication pour un établissement de liaison au coût optimisé vers un noeud de destination, correspondant au modèle de numérotation respectif, du réseau de télécommunication auquel l'installation de télécommunication est raccordée.

17. Procédé selon l'une des revendications précédentes,
**caractérisé par le fait que** chaque bloc de données ou le modèle de numérotation correspondant est prévu pour une liaison possible entre l'installation de télécommunication et un noeud de destination, correspondant au modèle de numérotation respectif, du réseau de télécommunication auquel l'installation de télécommunication est raccordée.

18. Procédé selon la revendication 17,
**caractérisé par le fait que** l'indicatif de destination contenu dans un modèle de numérotation correspond à un réseau local, comportant le noeud de destination respectif, du réseau de télécommunication.

19. Installation de télécommunication,
comportant des moyens formant mémoire pour mémoriser un ensemble de données de numéros d'appel (A) qui comporte plusieurs blocs de données avec à chaque fois un certain modèle de numérotation, chaque modèle de numérotation comprenant alors un certain indicatif de destination d'un réseau de télécommunication et au moins un certain attribut étant alors associé à chaque modèle de numérotation pour la gestion des modèles de numérotation dans l'installation de télécommunication, et
comportant des moyens pour compresser l'ensemble de données de numéros d'appel (A) mémorisé dans les moyens formant mémoire selon un procédé selon l'une des revendications 1 à 18.

20. Installation de télécommunication selon la revendication 19,
**caractérisée par le fait que** les moyens pour la compression de l'ensemble de données de numéros d'appel (A) comprennent un ordinateur pour la compression assistée par ordinateur de l'ensemble de données de numéros d'appel (A).
